(19) Europäisches Patentamt
European Patent Office
Office européen des brevets

(11) **EP 4 128 175 B1**

(12) **EUROPEAN PATENT SPECIFICATION**

(45) Date of publication and mention
of the grant of the patent:
**28.01.2026 Bulletin 2026/05**

(21) Application number: **20928474.4**

(22) Date of filing: **30.03.2020**

(51) International Patent Classification (IPC):
*H04L 9/32* (2006.01)       *G06F 21/33* (2013.01)
*G06F 21/62* (2013.01)       *G07C 13/00* (2006.01)

(52) Cooperative Patent Classification (CPC):
**H04L 9/3213; G06F 21/335; G06F 21/6254;
G07C 13/00; H04L 9/3247;** H04L 2209/42;
H04L 2209/463

(86) International application number:
**PCT/SE2020/050328**

(87) International publication number:
**WO 2021/201730 (07.10.2021 Gazette 2021/40)**

(54) **VERIFYING ELECTRONIC VOTES IN A VOTING SYSTEM**

ÜBERPRÜFUNG ELEKTRONISCHER STIMMEN IN EINEM STIMMABGABESYSTEM

VÉRIFICATION DE VOTES ÉLECTRONIQUES DANS UN SYSTÈME DE VOTE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**08.02.2023 Bulletin 2023/06**

(73) Proprietor: **Telefonaktiebolaget LM ERICSSON
(PUBL)
16483 Stockholm (SE)**

(72) Inventors:
• **GIRNYK, Maksym
170 61 Solna (SE)**
• **SHYROKYKH, Karina
170 62 Solna (SE)**
• **HIRNYK, Denys A
Kyiv, 03048 (UA)**

(74) Representative: **Ericsson
Patent Development
Torshamnsgatan 21-23
164 80 Stockholm (SE)**

(56) References cited:
EP-A1- 1 571 777          WO-A1-2019/165906
DE-A1- 102007 014 175     US-A1- 2005 269 406
US-A1- 2008 059 791       US-A1- 2009 037 260
US-A1- 2010 121 765       US-A1- 2016 261 588
US-A1- 2017 178 438       US-A1- 2017 358 161
US-A1- 2019 244 462       US-A1- 2020 076 791
US-B2- 7 516 892          US-B2- 8 145 520

• HUIAN LI ET AL.: "A viewable e-voting scheme
for environments with conflict of interest", 2013
IEEE CONFERENCE ON COMMUNICATIONS
AND NETWORK SECURITY (CNS, pages 251 -
259, XP032528981, DOI: 10.1109/
CNS.2013.6682714;

## Description

## TECHNICAL FIELD

The present disclosure relates generally to the field of electronic voting systems. More particularly, it relates to verifying electronic votes in a voting system.

## BACKGROUND

Holding elections or conducting polls/consumer surveys is expensive and time-consuming, leading to participants'/voters' fatigue and lack of engagement.

In the context of consumer research, such fatigue and disengagement might lead to a drawback of poor quality of responses.

In the context of elections, such fatigue and disengagement might lead to a drawback of low voter turnout and thus undermine legitimacy of elected representatives.

Therefore, there is a need for alternative approaches for verifying electronic votes in a voting system.

US 2009/037260 A1 (FELTEN EDWARD W [US] ET AL) relates to auditing ballots cast in an election, wherein each ballot is associated with a group.

US 7 516 892 B2 (PITNEY BOWES INC [US]) relates to electronic voting system and method having confirmation to detect modification of vote count.

US 8 145 520 B2 (CARDONE RICHARD J [US]; HALCROW MICHAEL AUSTIN [US]; IBM [US]) relates to method and system for verifying election results.

## SUMMARY

It should be emphasized that the term "comprises/comprising" when used in this specification is taken to specify the presence of stated features, integers, steps, or components, but does not preclude the presence or addition of one or more other features, integers, steps, components, or groups thereof. As used herein, the singular forms "a", "an" and "the" are intended to include the plural forms as well, unless the context clearly indicates otherwise.

Generally, when an apparatus is referred to herein, it is to be understood as a physical product. The physical product may comprise one or more parts, such as controlling circuitry in the form of one or more controllers, one or more processors, or the like.

It is an object of some embodiments to solve or mitigate, alleviate, or eliminate at least some of the above or other drawbacks.

According to a first aspect, this is achieved by a method for verifying an electronic vote in a voting system, wherein each voter is associated with a respective token generated by an authentication process in the voting system and wherein each token is configured for identifying the respective voter while maintaining an anonymity of the voter in the voting system.

The method comprises steps being performed by a device operably connected to the voting system.

The method comprises the steps of obtaining a token associated with a voter for which a vote is to be verified, providing the obtained token to an access manager in the voting system, and obtaining a signature sequence generated by the access manager, wherein the signature sequence is generated based on the provided token.

The method further comprises the steps of generating an audit request based on the obtained signature sequence and the obtained token, wherein the generated audit request comprises a binary sequence of actions to be performed on a ballot associated with the vote to be verified, providing the generated audit request to a processing server in the voting system, and obtaining a recounted tally based on the audit request from the processing server for comparison with a published tally on a bulletin board of the voting system.

In some embodiments, the binary sequence of actions to be performed on the ballot comprises encoding an operation corresponding to the vote to be verified as a binary variable in the signature sequence.

In some embodiments, the binary variable in the signature sequence comprises a negative binary value for adding a ballot or a corresponding negative binary value for removing a ballot.

In some embodiments, the binary sequence of actions to be performed on the ballot comprises actions for multiplying the signature sequence with a change pattern sequence for the vote of the respective voter.

In some embodiments, the results of the multiplied signature sequence with the change pattern sequence for the vote of the respective voter is aggregated in the processing server with one or more other results from other multiplications corresponding to votes of one or more other respective voters over corresponding number of time instances.

In some embodiments, the binary sequence of actions to be performed on the ballot further comprises actions for removing the change pattern sequence from the results of the multiplication by multiplying the results with the same change pattern sequence to recover the tally with added or subtracted vote of the one or more respective voters.

In some embodiments, the recounted tally is recalculated and stored in a memory associated with the processing server after each multiplication.

In some embodiments, the binary sequence comprises an orthogonal sequence.

In some embodiments, the orthogonal sequence comprises a Walsh code for use in a Code Division Multiple Access, CDMA, access channel.

In some embodiments, above steps are performed by one or more apps in the device.

A second aspect is a computer program product comprising a non-transitory computer readable medium, having thereon a computer program comprising program instructions. The computer program is loadable into a data processing unit and configured to cause execution of the method according to the first aspect when the computer program is run by the data processing unit.

A third aspect is an apparatus for verifying an electronic vote in a voting system, wherein each voter is associated with a respective token generated by an authentication process in the voting system and wherein each token is configured for identifying the respective voter while maintaining an anonymity of the voter in the voting system.

The apparatus comprises a controller being configured to cause obtainment of a token associated with a voter for which a vote is to be verified, provision of the obtained token to an access manager in the voting system, and obtainment of a signature sequence generated by the access manager, wherein the signature sequence is generated based on the provided token. The controller being further configured to cause generation of an audit request based on the obtained signature sequence and the obtained token, wherein the generated audit request comprises a binary sequence of actions to be performed on a ballot associated with the vote to be verified, provision of the generated audit request to a processing server in the voting system, and obtainment of a recounted tally based on the audit request from the processing server for comparison with a published tally on a bulletin board of the voting system.

A fourth aspect is a device comprising the apparatus according to the third aspect.

In some embodiments, the device being either a mobile communication device or a stationary device configured to communicate over a Code Division Multiple Access, CDMA, access channel. A fifth aspect is an access manager in a voting system, the access manager being configured to generate a signature sequence, wherein the signature sequence is generated based on a provided token from a device operably connected to the voting, and wherein the access manager is configured to adjust a length of the generated signature sequence based on a number of voters verifying respective votes simultaneously in the voting system.

A sixth aspect is a voting system for verifying an electronic vote, wherein each voter is associated with a respective token generated by an authentication process in the voting system and wherein each token is configured for identifying the respective voter while maintaining an anonymity of the voter in the voting system, the voting system comprising an access manager being configured to generate a signature sequence, a processing server being configured to recount a tally based on an audit request, a bulletin board being configured to publish a tally, and an apparatus according to the third aspect operably connected to the voting system.

Any of the above aspects may additionally have features identical with or corresponding to any of the various features as explained above for any of the other aspects.

An advantage of some embodiments is that alternative approaches for verifying electronic votes in a voting system are provided.

Yet an advantage of some embodiments is that electronic votes may be anonymously verified in a voting system.

Yet an advantage of some embodiments is that a plurality of electronic votes may be anonymously verified at one time, i.e. in parallel or simultaneously, in a voting system.

Yet an advantage of some embodiments is that quality of responses may be improved compared to what is possible according to prior art approaches.

Yet an advantage of some embodiments is that voter turnout may be increased and thereby legitimacy of elected representatives compared to what is possible according to prior art approaches.

It should be noted that, even if embodiments are described herein in the context of verifying electronic votes in a voting system, some embodiments may be equally applicable and/or beneficial also in other contexts.

## BRIEF DESCRIPTION OF THE DRAWINGS

Further objects, features and advantages will appear from the following detailed description of embodiments, with reference being made to the accompanying drawings. The drawings are not necessarily to scale, emphasis instead being placed upon illustrating the example embodiments.

Figure 1 is a flowchart illustrating example method steps according to some embodiments;

Figure 2 is a sequence diagram illustrating sequence steps according to some embodiments;

Figure 3a is a schematic drawing illustrating an example voting system according to some embodiments;

Figure 3b is a schematic drawing illustrating an example list of ballots according to some embodiments;

Figure 3c is a schematic drawing illustrating an example voting system according to some embodiments;

Figure 3d is a schematic drawing illustrating example operations according to some embodiments;

Figure 3e is a schematic drawing illustrating example tallies according to some embodiments;

Figure 4 is a block diagram illustrating an example apparatus according to some embodiments; and

Figure 5 is a schematic drawing illustrating an example computer readable medium according to some embodiments.

## DETAILED DESCRIPTION

As already mentioned above, it should be emphasized that the term "comprises/comprising" when used in this specification is taken to specify the presence of stated features, integers, steps, or components, but does not preclude the presence or addition of one or more other features, integers, steps, components, or groups thereof. As used herein, the singular forms "a", "an" and "the" are intended to include the plural forms as well, unless the context clearly indicates otherwise.

Embodiments of the present disclosure will be described and exemplified more fully hereinafter with reference to the accompanying drawings. The solutions disclosed herein can, however, be realized in many different forms and should not be construed as being limited to the embodiments set forth herein.

As mentioned above, drawbacks of participants'/voters' fatigue and lack of engagement may comprise poor quality of responses and/or low voter turnout and thus undermine legitimacy of elected representatives.

Electronic voting, as described herein, typically comprises voting that may use electronic means to either aid or take care of casting and counting votes. Depending on the particular implementation, electronic voting may use standalone electronic voting machines or devices connected to the Internet.

Electronic voting, or e-voting, technology could circumvent above drawbacks by providing a simple in use, yet reliable and secure solution. Same applies to expert polls and consumer surveys where sensitive information is being involved and high level of anonymity is required.

For example, electronic voting may comprise any one of online surveys, intra-company surveys, and elections of officers and board members and for other proxy elections.

Electronic voting systems rely on the voter's trust to the voting and processing entities. If manipulated by an attacker, the integrity of the tally cannot be verified by the public. This leads to uncertainties among voters regarding the fairness of voting and reliability of the final result with respect to alternations.

Typically, an individual cannot check the validity of voting as there is no way of verifying the correspondence between the voter's vote and the ballot or cipher text receipt that the voter receives from the voting entity. Hence, the voter cannot decrypt the ballot and check that it contains a vote for the right candidate.

As mentioned above, the above issues result in distrust to electronic voting systems, which leads to the disengagement of the public. This phenomenon of low voter turnout and general lack of civic participation that is being observed nowadays is known in the literature as the voter fatigue. General public may regard the electoral system as a "black box". Hence, the citizens have to trust that the system operates correctly and that election officials handle their ballots with discretion.

Due to the lack of trust in electronic voting systems, in particular due to the problem of verifiability of the system function, these were abandoned in several countries.

In the following, embodiments will be presented where alternative approaches for verifying electronic votes in a voting system are described.

Verification, as described herein, typically comprises an act or process of confirming or checking the accuracy of a casted vote in an electronic voting system.

Electronic vote, as described herein, typically comprises a vote which may be casted, processed, and tallied or re-tallied in an electronic voting system.

Voting system, as described herein, typically comprises an electronic system for receiving a casted vote, processing the vote, and tallying or re-tallying one or more received and processed votes. In addition, the casted and processed votes may be verified in the electronic system.

It should be noted that, even if embodiments are described herein in the context of verifying an electronic vote in a voting system, wherein each voter is associated with a respective token generated by an authentication process in the voting system and wherein each token is configured for identifying the respective voter while maintaining an anonymity of the voter in the voting system, some embodiments may be equally applicable and/or beneficial also in other contexts wherein one or more electronic votes are verified in a voting system.

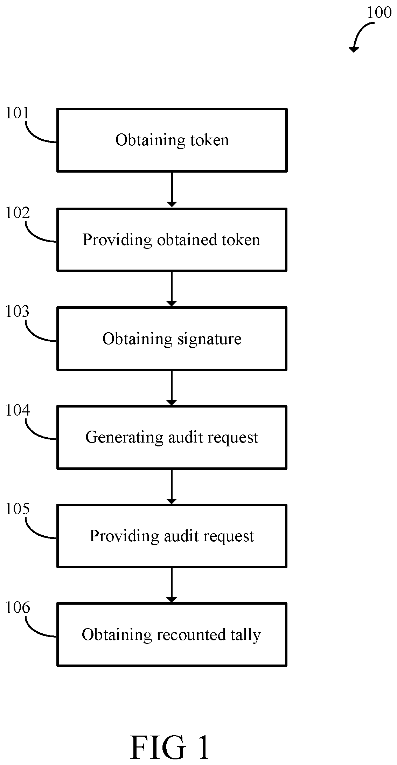

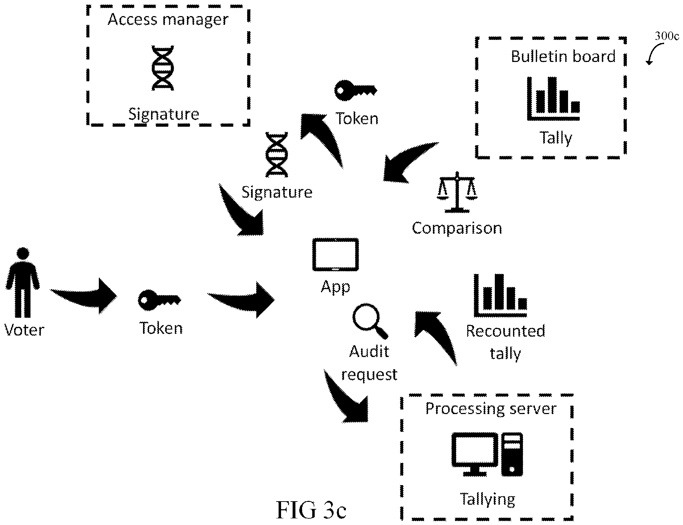

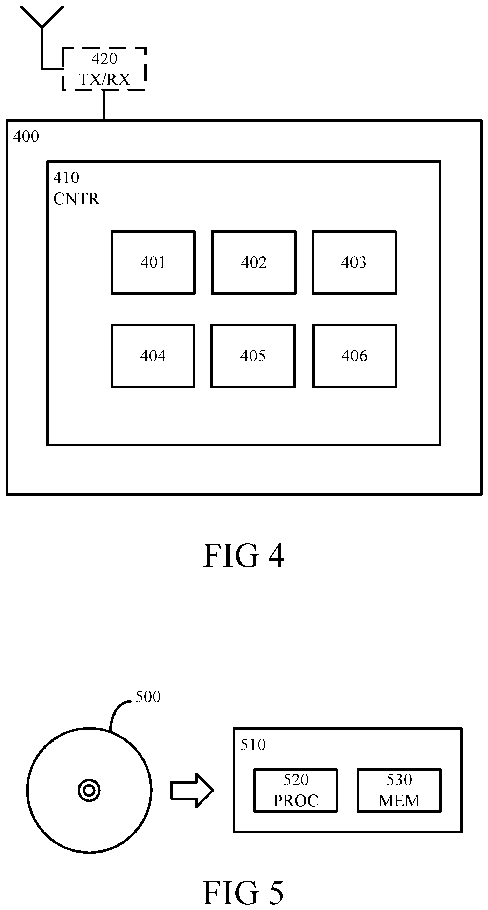

Figure 1 is a flowchart illustrating method steps of an example method 100 according to some embodiments. The method 100 is for verifying an electronic vote in a voting system. Thus, the method 100 may, for example, be performed by the apparatus 400 and/or the controller 410 of Figure 4 in the voting system 300c of Figure 3c; all of which will be described later herein.

In the method for verifying an electronic vote in a voting system, each voter is associated with a respective token generated by an authentication process in the voting system and each token is configured for identifying the respective voter while maintaining an anonymity of the voter in the voting system.

For example, an authentication process may comprise multi-factor authentication, e.g. a token device configured to generate a time-based PIN or which can compute a response from a challenge number issued by a server.

For example, a token generated by the authentication process may comprise an access token generated based on one or more provided credentials in a system, wherein the credentials are verified e.g. against an authentication database.

The method 100 comprises the following steps 101-106 being performed by a device operably connected to the voting system.

In some embodiments, the steps 101-106 are performed by one or more apps in the device.

In step 101, a token associated with a voter for which a vote is to be verified is obtained (reference to 'Voter' and 'Token' provided to the 'App' of Figure 3c).

Alternatively or additionally, the token is obtained from a cloud environment of which the voter has performed an authentication process with and generated the token which in turn is obtained by the device.

In step 102, the obtained token is provided to an access manager in the voting system (reference to 'Token' provided to the 'Access Manager' of Figure 3c).

Alternatively or additionally, the access manager comprises one or more access managing entities which may be comprised in one or more storage devices, e.g. servers, in a cloud environment.

In step 103, a signature sequence generated by the access manager is obtained, wherein the signature sequence is generated based on the provided token (reference to 'Signature' provided to the 'App' of Figure 3c).

Alternatively or additionally, scaling of the capacity to generate signature sequences may also comprise an extension of the signature length to accommodate generation of unique signatures for two or more parallel verifications in the voting system.

Alternatively or additionally, the access manager is configured to scale up and down in terms of how many access managing entities, i.e. processing capacity, are required to match the demand in terms of simultaneous verifications by two or more voters in the voting system.

For example, the access managing entities may be implemented in a cloud environment to enable the scaling.

Alternatively or additionally, the access manager comprising one or more access managing entities may be distributed as the tally re-computation may be performed in a distributed manner, as described below for the processing server, and wherein the access manager can also be local. Since fewer voters (limited only to the given region) are asking for vote audit, fewer orthogonal signature sequences are needed to audit votes locally. Then, a local access managing entity may provide the interested voters with their signatures, so that they are sending requests to the local processing entity, and conduct the vote verification locally.

In step 104, an audit request is generated based on the obtained signature sequence and the obtained token, wherein the generated audit request comprises a binary sequence of actions to be performed on a ballot associated with the vote to be verified.

In some embodiments, the binary sequence of actions to be performed on the ballot comprises encoding an operation corresponding to the vote to be verified as a binary variable in the signature sequence.

For example, the signature may be selected from a set of orthogonal sequences.

In some embodiments, the binary variable in the signature sequence comprises a negative binary value for adding a ballot or a corresponding negative binary value for removing a ballot.

In some embodiments, the binary variable in the signature sequence comprises a positive binary value for adding a ballot or a corresponding positive binary value for removing a ballot.

In some embodiments, the binary sequence of actions to be performed on the ballot comprises actions for multiplying the signature sequence with a change pattern sequence for the vote of the respective voter.

In step 105, the generated audit request is provided to a processing server in the voting system (reference to 'Audit request' provided to the 'Processing server' of Figure 3c).

Alternatively or additionally, the processing server is configured to scale up and down in terms of how many processing server entities, i.e. processing capacity, are required to match the demand in terms of simultaneous verifications by two or more voters in the voting system.

For example, the processing server entities may be implemented in a cloud environment to enable the scaling.

Alternatively or additionally, the processing server comprising one or more processing entities may be distributed at a local/regional level, where a local processing server, during the voting phase, collects the votes and the tokens that voted in this region. The computed tally is sent further to the centralized server/central election commission, so that the entire tally is computed there. After the election is finished, the local processing server can request (from the central server) a tally computed without the given region, so that the given local server can re-compute the entire tally later on based on its local information (by adding its region's recomputed tally to the tally computed without this region). In this way, the re-computation of the tally is not computationally heavy and can be done locally. Then the operations are conducted on a subset of the data belonging to the given regional election unit.

Alternatively or additionally, results to those of a local public bulletin board (if available) may be compared and in that case, there is no need to request a tally without the given region.

In some embodiments, the results of the multiplied signature sequence with the change pattern sequence for the vote of the respective voter is aggregated in the processing server with one or more other results from other multiplications corresponding to votes of one or more other respective voters over corresponding number of time instances.

In some embodiments, the binary sequence of actions to be performed on the ballot further comprises actions for removing the change pattern sequence from the results of the multiplication by multiplying the results with the same change pattern sequence to recover the tally with added or subtracted vote of the one or more respective voters.

In some embodiments, the recounted tally is recalculated and stored in a memory associated with the processing server after each multiplication.

In some embodiments, the binary sequence comprises an orthogonal sequence.

In some embodiments, the orthogonal sequence comprises a Walsh code for use in a Code Division Multiple Access, CDMA, access channel.

In step 106, a recounted tally based on the audit request is obtained from the processing server for comparison with a published tally on a bulletin board of the voting system.

In some embodiments, the recounted tally may comprise a message indicative of the particular vote and/or a decremented tally by the particular vote.

Hence, by providing, via a device operably connected to a voting system, a post-factum query to the voting system, the voter can obtain a tally with the voter's casted vote removed. By comparing this tally with the officially published one, the voter can verify that his vote was associated with the correct candidate.

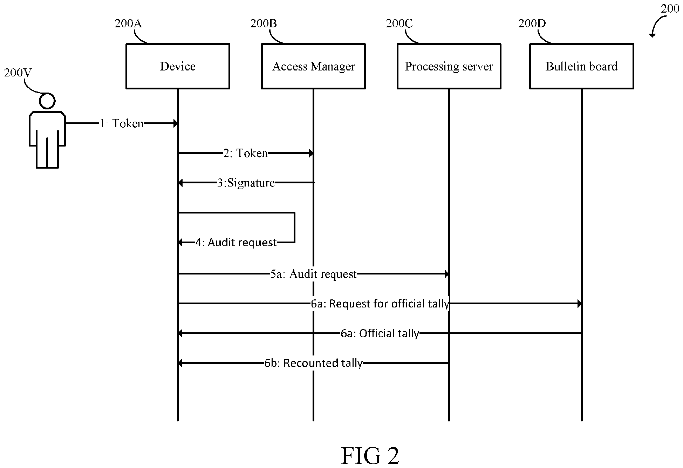

Any of the above steps for Figure 1 may additionally have features identical with or corresponding to any of the various features as explained below for Figures 2-5.

Figure 2 is a sequence diagram illustrating sequence steps of an example sequence 200 according to some embodiments. The sequence 200 is for verifying an electronic vote in a voting system. Thus, the sequence 200 may, for example, be performed by the apparatus 400 and/or the controller 410 of Figure 4 in the voting system 300c of Figure 3c; all of which will be described later herein.

The sequence 200 comprises the following steps.

In step 1, a token associated with a voter 200V for which a vote is to be verified is provided from the voter 200V to a device 200A (compare with step 101 of Figure 1).

Alternatively or additionally, the token associated with the voter 200V is obtained from a cloud environment in which the voter has stored the token.

In step 2, the voter associated token is provided by the device 200A to an access manager 200B in the voting system (compare with step 102 of Figure 1).

Alternatively or additionally, a plurality of tokens may be provided to the access manager 200B in the voting system from a corresponding plurality of devices 200A for parallel generation of signature sequences.

In step 3, a signature sequence generated by the access manager 200B is obtained by the device 200A, wherein the signature sequence is generated based on the provided token (compare with step 103 of Figure 1).

Alternatively or additionally, a plurality of signature sequences, generated in parallel, may be provided from the access manager 200B to a corresponding plurality of devices 200A.

In step 4, an audit request is generated by the device 200A based on the obtained signature sequence from the Access Manager 200B and the obtained token from the voter 200V, wherein the generated audit request comprises a binary sequence of actions to be performed on a ballot associated with the vote to be verified (compare with step 104 of Figure 1).

In step 5, the generated audit request is provided from the device 200A to a processing server 200C in the voting system for processing of the audit request (compare with step 105 of Figure 1).

In some embodiments, the processing of the audit request comprises a binary sequence of actions to be performed on a ballot.

For example, the binary sequence may comprise encoding an operation corresponding to the vote to be verified as a binary variable in the signature sequence.

For example, the binary sequence may comprise actions for multiplying the signature sequence with a change pattern sequence for the vote of the respective voter.

For example, the binary sequence may comprise actions for removing the change pattern sequence from the results of the multiplication by multiplying the results with the same change pattern sequence to recover the tally with added or subtracted vote of the one or more respective voters.

In step 6a, the voter 200V via the device 200A requests for an official tally from the bulletin board 200D, and the results (i.e. the official tally) from the bulletin board 200D are provided to the device 200A for comparison in the next step 6b with a recounted tally.

In step 6b, the recounted tally based on the audit request is obtained from the processing server 200C for comparison with the official tally from the bulletin board 200D of the voting system, wherein the comparison comprises comparing the official tally (i.e. the published tally) with the recounted tally in which the voter's vote is removed (compare with step 106 of Figure 1).

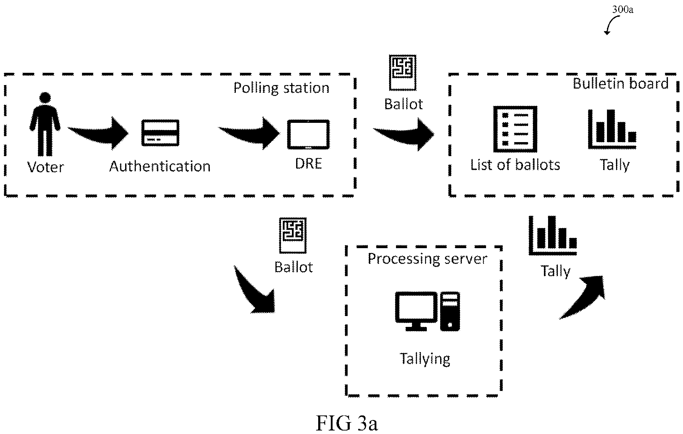

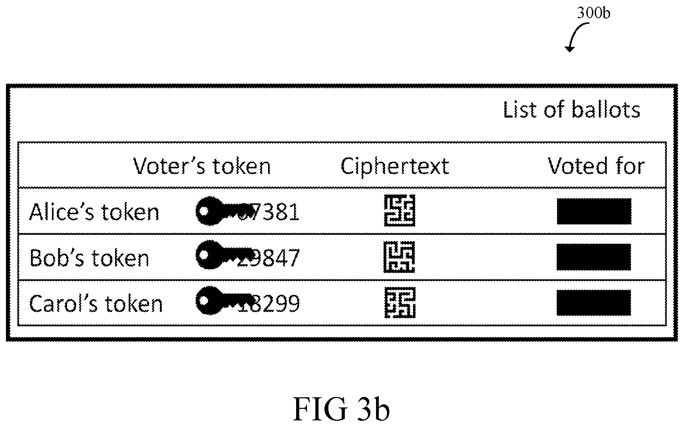

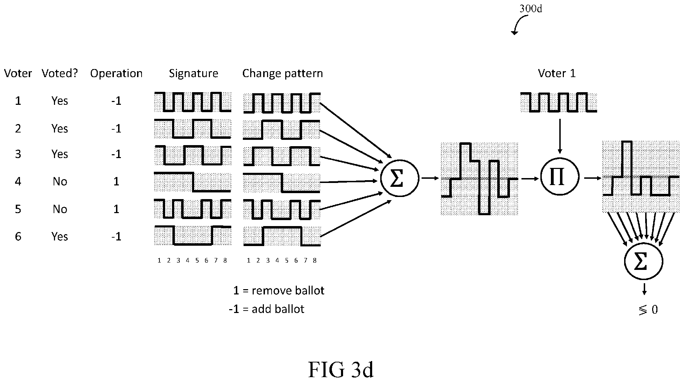

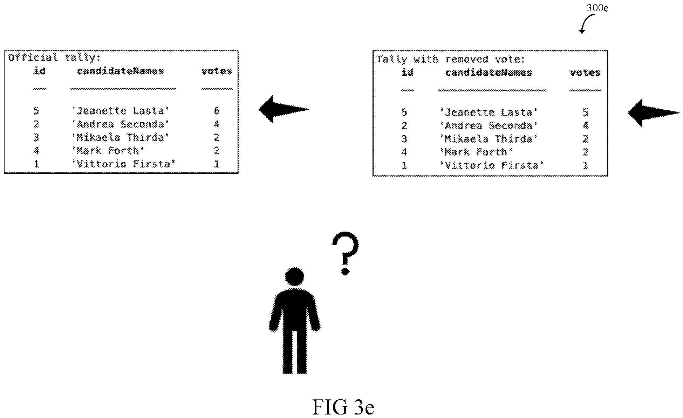

Any of the above steps for Figure 2 may additionally have features identical with or corresponding to any of the various features as explained above for Figure 1 and below for Figures 3-5.

Figure 3a is a schematic drawing illustrating entities and entity interactions of an example voting system 300a according to some embodiments. The voting system 300a is for verifying an electronic vote in a voting system.

Figure 3a illustrates an electronic voting process, wherein the voter enters a polling station, gets authenticated and obtains a token that will allow the voter to cast the vote in the electronic voting system 300a.

The voter then proceeds with entering a private booth and approaches a Direct Recording Electronic (DRE) machine, i.e. a voting entity. The voter thereafter inputs the obtained token and casts a vote for a candidate from a given list, and receives a cipher-text receipt at the end of the voting transaction.

The DRE machine sends the encrypted ballot comprising information about the casted vote to a bulletin board, i.e. publishing entity, and to a processing server, i.e. processing entity.

The bulletin board publishes the encrypted ballot for verification purpose. The processing server multiplies the cipher-texts of the ballots, thereby conducting the counting of the votes, and obtains a tally. The tally is then sent to the bulletin board where it gets published in real time. In this way, the voting process is controllable by the public which has access to the information published at the bulletin board. In case of online polling, the role of the DRE machine could be played by an app on mobile communication device.

For example, an implementation of electronic voting, may typically comprise a voting entity, such as a DRE machine situated in private booths at the election venue. A legitimate voter, the voter being considered as legitimate after being authenticated, may obtain a one-time token disassociated from the voter's identity which enables voting by casting a ballot with help of direct input to the DRE. In the case of online voting, so-called i-voting, or polling, the role of the voting entity can be played by an app on a stationary device or a mobile communication device.

After obtaining the ballot (or a batch of ballots from a plurality of voters), the DRE encrypts the ballot and sends it to the publishing entity, e.g. an electronic bulletin board, that publishes the encrypted ballots for transparency sake. The processing entity, e.g. a processing server, then obtains, e.g. downloads, the ballots, conducts the counting, and publishes the tally results (via append-only access) at the publishing entity, so that the public can monitor them.

Electronic voting may typically comprise a voting phase, a tallying phase, and a verifying phase of which will be described herein.

- Voting phase: The voter enters a private booth, or opens a voting app, authenticates itself, and obtains a token unlinked from its identity. The voter then casts the vote with help of the voting entity that produces an encrypted ballot. The voting entity thereafter publishes the ballots at the publishing entity. The publishing entity maintains a publicly accessible list of encrypted votes in form of cipher-texts associated with the voters' tokens.

- Tallying phase: The processing entity downloads the ballots from the publishing entity and conducts the tallying, without revealing which token voted for whom, and sends the updated tally to the publishing entity. The publishing entity maintains a constantly updated tally.

- Verifying phase: The materials available at the publishing entity are carefully audited to ensure the integrity of the voting process.

The voting phase and the tallying phase comprise authentication, encryption, and secure transmission.

For example, the voting entity could provide the voter with an encrypted receipt of the voter's voting from which it is impossible to infer whom the voter voted for. The ballot is then sent to the publishing entity which publishes them at the publishing entity to acknowledge that the voter has voted. The voter is supposed to verify that his encrypted ballot has been published at the publishing entity. The processing entity then downloads (via read-only access) the ballots and counts the votes for candidates without revealing the identity/token information of the voter and publishes the tally at the publishing entity. This can be done, e.g., by means of homomorphic cryptography ensuring that computations on cipher-texts generate an encrypted result which when decrypted matches the result of such computations on plaintexts.

For example, multiplication of the cipher-texts of encrypted votes might correspond to the addition of the plaintexts of the votes that are being encrypted. In this way, the counting of the votes does not need decryption. The resulting cipher-text of the tally result can then be decrypted publicly by the authorities to show the public that the counting is correct. Moreover, any interested party could on its own conduct the multiplication of the cipher-texts published by the processing entity and thereby verify that the result is correct.

The verifying phase of electronic voting system may comprise employing block-chain technology, wherein the block-chain stores a hash of votes, so that whenever a manipulation of vote appears this immediately leads to a hash violation. However, such systems are characterized by an inherent linkage between the votes and the voters. When the block-chain is opened up for verification, the identity of the voters may be revealed which may pose a threat to voters' privacy.

The verifying process may comprise solutions involving external trusted tallying authorities that issue public keys to voting entities, wherein the voting entities encrypt the votes using the issued keys, and those could only be decrypted jointly by a quorum of tallying authorities themselves. However, such approaches render implementation of such systems as complex as there should be multiple such tallying authorities employed. In order to overcome complexity while maintaining anonymity in the verifying phase, pre-computing of encrypted ballots may be performed, so that after the election, multiplication of all published cipher-texts cancels out random effects of the initial encryption, allowing anyone to verify the tally. However, such an approach of pre-computation of the ballots poses extra security requirements to the hardware storing the pre-computed data and protection of the latter boosts the costs of the equipment.

In general, the above approaches are characterized by some level of trust to the authority conducting the voting.

Figure 3b is a schematic drawing illustrating information of an example list of ballots 300b according to some embodiments. The list of ballots 300b is for verifying an electronic vote in a voting system.

Figure 3b illustrates a list of ballots 300b stored at a bulletin board. The list of ballots 300b contains voter's tokens, and corresponding cipher-texts of their votes. It is possible to verify the tally by repeating the counting of votes via multiplication of the cipher-texts while the information of whom they voted for is inaccessible.

Figure 3c is a schematic drawing illustrating entities and entity interactions of an example voting system 300c according to some embodiments. The voting system 300c is for verifying an electronic vote in a voting system.

Figure 3c illustrates the verifying phase of the electronic voting process. After casting the vote and leaving the private booth, the voter may request an audit of the voter's own vote by means of a dedicated app on a mobile communication device and the voter obtained token for the voting in the voting phase. The app may then generate a request for a Code-Division Multiple Access (CDMA) signature sequence from the access manager, i.e. access management entity, providing own token for authentication. Using the obtained signature and the voter's token, the app may request audit from the processing server, i.e. processing server entity, by providing a binary sequence of actions that need to be performed on the ballot associated with the given token. Then, the processing server conducts the recounting and returns a mixture of recounted tallies of all auditing users. Using voter's own signature, the voter can infer the dedicated tally with his vote removed. By comparing the recounted tally with the official one, the voter can deduct which candidate the casted vote was associated with. Again, since the processing server does not have the voters' sequence, it cannot be decoded what was the tally for this voter, and hence cannot know whom the voter voted for. Hence, the anonymity of the voter is maintained in the verifying phase.

To achieve end-to-end verifiability the voting system may incorporate the voter-initiated vote auditing.

The voting and tallying phases may comprise authentication, encryption, and secure transmission. In the verifying phase, the voting system establishes an access channel for the voter to the processing server, e.g. by means of a dedicated terminal or via an app on a mobile communication device. The processing server then takes a snapshot of the current tally at the given moment and recounts it with the voter's vote subtracted from the current list of cipher-text ballots. After the recounting, both the official and the recounted tallies may be sent to a mobile communication device of the voter, and the voter compares the two. From this comparison it shall be evident that in the recounted tally the voter's casted vote has disappeared.

In massive elections several voters may initiate the audit of their ballots simultaneously which may mean that several votes will be subtracted from the tally and it will be difficult to see for a voter that his vote is indeed among those subtracted and that it points to the right candidate. Further, the processing server, by subtracting a single vote and comparing the resulting tallies could compromise the voter's identity, i.e. the anonymity of the voter.

Hence, there is a need to tend to simultaneous audits while maintaining the anonymity of the auditing voter.

Figure 3d is a schematic drawing illustrating example operations 300d over an access channel according to some embodiments. The example operations 300d are for verifying an electronic vote in a voting system.

Figure 3d illustrates a plurality of voters (voters 1-6) which have decided to audit their own votes. The system has thus allocated a set of 8 Walsh signatures of length 8. The illustration in Figure 3d concerns a given candidate, and hence the voting for voters can be encoded as a binary variable Yes/No (for the case of multiple candidates the operation is similar, hence no loss of generality). In this way, the manipulation with ballots is done 8 times in total and is encoded into a -1/+1 operation on the ballot list (add/remove the given voter's ballot), also multiplied with the value of the signature at a given instance (tally change pattern). After each manipulation, the tally is recalculated and stored, so that the final 8-instance mixture tally is reported to the auditing voters. By multiplying the mixture with voter's own signature and aggregating it over 8 time instances, each voter is able to recover the tally with own vote added/subtracted.

Alternatively or additionally, a Direct-Sequence CDMA (DS-CDMA) like multiple-access channel may be established for voters' terminals (via, e.g., an app on their mobiles) to the processing server, i.e. processing entity. In this approach, the ballots of all auditing voters are removed (or added twice) from the tally simultaneously. In this way, the processing server cannot establish the identity of the voter (the voter can neither verify voter's own vote). However, this is done several times and each such query is signed with a sequence from a set of orthogonal or quasi-orthogonal sequences. This allows every voter to infer the effect of his own subtraction from the mixture of the effects of all auditing users at once.

More precisely, each voter $i$ will be assigned an orthogonal signature sequence $s_i(t)$ (e.g., a Walsh function, a Rademacher function, a discrete Fourier transform (DFT) sequence or any other sequence from a set of orthogonal or quasi-orthogonal functions of length $T$, where the latter is chosen so that there are enough appropriate signatures in the set to accommodate all the voters requesting the vote audit. The signature is obtained from an access manager, i.e. access-management entity, upon the voter's request to audit voter's own vote. The access manager is a separate subsystem disconnected from the rest of the electronic voting system, and primarily dedicated to assigning orthogonal signatures to the auditing voters (i.e., ensuring that the sequences do not repeat and that they are long enough so that the set accommodates all the auditing voters).

Being equipped with a signature, a voter's mobile communication device can request manipulation (removal or extra addition) of its ballot from the processing entity for the recounting of the tally. The manipulation is initiated multiple times $T$ (as many queries as the periodicity of the particular signature function of choice) and the tally is recounted for each query. Since the processing entity is unaware of the voter's signature, it cannot decode who is voting for whom.

Consider, for the sake of example, only votes for the first candidate. The same operation is straightforwardly performed on the set of all candidates. Each query $q_i$ represents the indicator of the requested manipulation for the ballot in of an auditing voter $i$ for the counting of the tally, i.e.,

$$q_i = \begin{cases} 1, & remove\ ballot \\ -1, & add\ ballot\ twice \end{cases}$$

If auditing voter $i$ has voted for the given candidate, the vote counter of this candidate shall be decremented by 1, otherwise it should be incremented by 1. In practice, this shall be done by re-computing the tally with removing the ballot of this voter from the list or adding an extra ballot to the list, respectively. Each such query $q_i$ is then multiplied with the value of the signature function $s_i(t) \in \{\pm 1\}$ of the given auditing voter $i$ at a given time instant $t$. As a result, the total number of votes $N(t)$ for the given candidate without auditing voters' votes depends on the time instant $t$, i.e.,

$$N(t) = N - \Delta(t),$$

where $N$ is the official total number of votes for the given candidate revealed by the publishing entity, and the difference in the number of votes due to the set of audit requests from $M$ auditing voters is given by

$$\Delta(t) = \sum_{i=1}^{M} q_i\, s_i(t),$$

the former being a sequence of length $T$. Now, the voter's terminal examines the sign of a dot-product of $\Delta$ with the voter's signature $s_i$, i.e.,

$$sign\left(\sum_{t=1}^{T} \Delta(t)s_i(t)\right) \lessgtr 0.$$

If the sign is negative, the record in the tally corresponding to the given candidate is decremented by 1, otherwise it stays unchanged. By comparing the obtained tally with the official one published by the publishing entity, the voter can on his own verify whether his vote was taken into account and that it went to the correct candidate.

Figure 3e is a schematic drawing illustrating example tallies 300e for comparison according to some embodiments. The example tallies 300e are for verifying an electronic vote in a voting system.

Figure 3e illustrates that after recovering the tally with own vote removed, the voter can compare this tally with the official one published at the bulletin board and verify which candidate his ballot is associated with. This increases the transparency and legitimacy of the electoral process and by that might motivate the voter to be more active/responsible on future occasions. If the association is wrong, the incident should be immediately reported to the election staff. In the present example, the voter has voted for the candidate with ID 5, which is clearly verified from comparing the two tallies.

Hence, a CDMA-like multiple-access channel is established between a voter's terminal (e.g., an app in a mobile communication device) which allows a group of voters to form a post-factum vote auditing query to the processing server, i.e. processing entity. The query contains a set of remove/add actions on the ballots identified by the voters' tokens and recounting of the tallies during several time instances. The obtained mixture is then reported to all the auditing voters who can decode own individual tallies by multiplying the mixture with own CDMA signature sequences. In this way, each voter can get a separate tally with his vote removed. By comparing this tally with the officially published one the voter can verify that his vote was associated with the right candidate.

Alternatively or additionally, the app could just message that the voter voted for a particular candidate, i.e. without the decremented tally.

Figure 4 is a schematic block diagram illustrating a controller of an example apparatus 400 according to some embodiments. The apparatus 400 is for verifying electronic votes in a voting system. Thus, the apparatus 400 and/or the controller 410 may, for example, be configured to perform one or more of the method steps of Figure 1 and/or one or more sequence steps of Figure 2 and/or one or more of any steps otherwise described herein.

The apparatus 400 is for verifying an electronic vote in a voting system, wherein each voter is associated with a respective token generated by an authentication process in the voting system and wherein each token is configured for identifying the respective voter while maintaining an anonymity of the voter in the voting system.

The apparatus 400 comprises a controller 410, e.g. device controlling circuitry, configured to cause obtainment of a token associated with a voter for which a vote is to be verified, provision of the obtained token to an access manager in the voting system, and obtainment of a signature sequence generated by the access manager, wherein the signature sequence is generated based on the provided token.

The controller 410 is further configured to cause generation of an audit request based on the obtained signature sequence and the obtained token, wherein the generated audit request comprises a binary sequence of actions to be performed on a ballot associated with the vote to be verified, provision of the generated audit request to a processing server in the voting system, and obtainment of a recounted tally based on the audit request from the processing server for comparison with a published tally on a bulletin board of the voting system.

The apparatus 400 comprises, as mentioned above, the controller (CNTR; e.g., control circuitry or a controlling module) 410, which may in turn comprise, (or be otherwise associated with; e.g., connected or connectable to), a token obtainer 401, e.g. obtaining circuitry or obtaining module, configured to obtain a token associated with a voter for which a vote is to be verified (compare with step 101 of Figure 1), a token provider 402, e.g. providing circuitry or providing module, configured to provide the obtained token to an access manager in the voting system (compare with step 102 of Figure 1), and a signature obtainer 403, e.g. obtaining circuitry or obtaining module, configured to obtain a signature sequence generated by the access manager, wherein the signature sequence is generated based on the provided token (compare with step 103 of Figure 1).

The controller 410 further comprises, (or is otherwise associated with; e.g., connected or connectable to), an audit request generator 404, e.g. generating circuitry or generating module, configured to generate an audit request based on the obtained signature sequence and the obtained token, wherein the generated audit request comprises a binary sequence of actions to be performed on a ballot associated with the vote to be verified (compare with step 104 of Figure 1), an audit request provider 405, e.g. providing circuitry or providing module, configured to provide the generated audit request to a processing server in the voting system (compare with step 105 of Figure 1), and a tally obtainer 406, e.g. obtaining circuitry or obtaining module, configured to obtain a recounted tally based on the audit request from the processing server for comparison with a published tally on a bulletin board of the voting system (compare with step 106 of Figure 1).

In some embodiments, a device comprises the apparatus as described in Figure 4.

For example, the device may comprise a mobile communication device.

The apparatus 400 may further optionally comprise, (or be otherwise associated with; e.g., connected or connectable to), in some embodiments, a transceiver TX/RX 420, e.g. transceiving circuitry or transceiving module, configured to transmit and receive radio signals e.g. in accordance with verifying electronic votes in a voting system.

Generally, when an apparatus is referred to herein, it is to be understood as a physical product. The physical product may comprise one or more parts, such as controlling circuitry in the form of one or more controllers, one or more processors, or the like.

The described embodiments and their equivalents may be realized in software or hardware or a combination thereof. The embodiments may be performed by general purpose circuitry. Examples of general purpose circuitry include digital signal processors (DSP), central processing units (CPU), Graphics Processing Units (GPU), co-processor units, field programmable gate arrays (FPGA) and other programmable hardware. Alternatively or additionally, the embodiments may be performed by specialized circuitry, such as application specific integrated circuits (ASIC). The general purpose circuitry and/or the specialized circuitry may, for example, be associated with or comprised in an apparatus such as a wireless communication device.

Embodiments may appear within an electronic apparatus (such as a wireless communication device) comprising arrangements, circuitry, and/or logic according to any of the embodiments described herein. Alternatively or additionally, an electronic apparatus (such as a wireless communication device) may be configured to perform methods according to any of the embodiments described herein.

According to some embodiments, a computer program product comprises a computer readable medium such as, for example a universal serial bus (USB) memory, a plug-in card, an embedded drive or a read only memory (ROM).

Figure 5 illustrates an example computer readable medium in the form of a compact disc (CD) ROM 500. The computer readable medium has stored thereon a computer program comprising program instructions. The computer program is loadable into a data processor (PROC) 520, which may, for example, be comprised in a wireless communication device 510. When loaded into the data processor, the computer program may be stored in a memory (MEM) 530 associated with or comprised in the data processor.

In some embodiments, the computer program may, when loaded into and run by the data processing unit, cause execution of method steps according to, for example, Figure 1 and/or sequence steps according to, for example, Figure 2 and/or one or more of any steps otherwise described herein.

Generally, all terms used herein are to be interpreted according to their ordinary meaning in the relevant technical field, unless a different meaning is clearly given and/or is implied from the context in which it is used.

Reference has been made herein to various embodiments. However, a person skilled in the art would recognize numerous variations to the described embodiments that would still fall within the scope of the claims.

For example, the method embodiments described herein discloses example methods through steps being performed in a certain order. However, it is recognized that these sequences of events may take place in another order without departing from the scope of the claims. Furthermore, some method steps may be performed in parallel even though they have been described as being performed in sequence. Thus, the steps of any methods disclosed herein do not have to be performed in the exact order disclosed, unless a step is explicitly described as following or preceding another step and/or where it is implicit that a step must follow or precede another step.

In the same manner, it should be noted that in the description of embodiments, the partition of functional blocks into particular units is by no means intended as limiting. Contrarily, these partitions are merely examples. Functional blocks described herein as one unit may be split into two or more units. Furthermore, functional blocks described herein as being implemented as two or more units may be merged into fewer (e.g. a single) unit.

Any feature of any of the embodiments disclosed herein may be applied to any other embodiment, wherever suitable. Likewise, any advantage of any of the embodiments may apply to any other embodiments, and vice versa.

Hence, it should be understood that the details of the described embodiments are merely examples brought forward for illustrative purposes, and that all variations that fall within the scope of the claims are intended to be embrace therein.

## Claims

1. A method for verifying an electronic vote in a voting system, wherein each voter is associated with a respective token generated by an authentication process in the voting system and wherein each token is configured for identifying the respective voter while maintaining an anonymity of the voter in the voting system, the method comprising steps being performed by a device operably connected to the voting system of:

obtaining (101) a token associated with a voter for which a vote is to be verified,
providing (102) the obtained token to an access manager in the voting system,
obtaining (103) a signature sequence generated by the access manager, wherein the signature sequence is generated based on the provided token,
generating (104) an audit request based on the obtained signature sequence and the obtained token, wherein the generated audit request comprises a binary sequence of actions to be performed on a ballot associated with the vote to be verified,
providing (105) the generated audit request to a processing server in the voting system, and
obtaining (106) a recounted tally based on the audit request from the processing server for comparison with a published tally on a bulletin board of the voting system.

2. The method according to claim 1, wherein the binary sequence of actions to be performed on the ballot comprises encoding an operation corresponding to the vote to be verified as a binary variable in the signature sequence.

3. The method according to any of claims 1-2, wherein the binary variable in the signature sequence comprises a negative binary value for adding a ballot or a corresponding negative binary value for removing a ballot.

4. The method according to any of claims 1-3, wherein the binary sequence of actions to be performed on the ballot comprises actions for multiplying the signature sequence with a change pattern sequence for the vote of the respective voter.

5. The method according to any of claims 1-4, wherein the results of the multiplied signature sequence with the change pattern sequence for the vote of the respective voter is aggregated in the processing server with one or more other results from other multiplications corresponding to votes of one or more other respective voters over corresponding number of time instances.

6. The method according to any of claims 1-5, wherein the binary sequence of actions to be performed on the ballot further comprises actions for removing the change pattern sequence from the results of the multiplication by multiplying the results with the same change pattern sequence to recover the tally with added or subtracted vote of the one or more respective voters.

7. The method according to claims 1-6, wherein the recounted tally is recalculated and stored in a memory associated with the processing server after each multiplication.

8. The method according to any of claims 1-7, wherein the binary sequence comprises an orthogonal sequence.

9. The method according to any of claims 1-8, wherein the orthogonal sequence comprises a Walsh code for use in a Code Division Multiple Access, CDMA, access channel.

**10.** The method according to any of claims 1-9, wherein the above steps are performed by one or more apps in the device.

**11.** A computer program product comprising a non-transitory computer readable medium, having thereon a computer program comprising program instructions, the computer program being loadable into a data processing unit and configured to cause execution of the method according to any of claims 1 through 10 when the computer program is run by the data processing unit.

**12.** An apparatus for verifying an electronic vote in a voting system, wherein each voter is associated with a respective token generated by an authentication process in the voting system and wherein each token is configured for identifying the respective voter while maintaining an anonymity of the voter in the voting system, the apparatus comprising a controller (410) configured to cause:

obtainment of a token associated with a voter for which a vote is to be verified,
provision of the obtained token to an access manager in the voting system,
obtainment of a signature sequence generated by the access manager, wherein the signature sequence is generated based on the provided token,
generation of an audit request based on the obtained signature sequence and the obtained token, wherein the generated audit request comprises a binary sequence of actions to be performed on a ballot associated with the vote to be verified,
provision of the generated audit request to a processing server in the voting system, and
obtainment of a recounted tally based on the audit request from the processing server for comparison with a published tally on a bulletin board of the voting system.

**13.** A device comprising the apparatus according to claim 12.

**14.** The device according to claim 13, wherein the device being either a mobile communication device or a stationary device configured to communicate over a Code Division Multiple Access, CDMA, access channel.

**15.** An access manager in a voting system, the access manager being configured to:

generate a signature sequence, wherein the signature sequence is generated based on a provided token from a device operably connected to the voting system, and
adjust a length of the generated signature sequence based on a number of voters verifying respective votes simultaneously in the voting system.

**16.** A voting system for verifying an electronic vote, wherein each voter is associated with a respective token generated by an authentication process in the voting system and wherein each token is configured for identifying the respective voter while maintaining an anonymity of the voter in the voting system, the voting system comprising an access manager being configured to generate a signature sequence, a processing server being configured to recount a tally based on an audit request, a bulletin board being configured to publish a tally, and an apparatus according to claim 12 operably connected to the voting system.

**Patentansprüche**

**1.** Verfahren zum Überprüfen einer elektronischen Stimme in einem Wahlsystem, wobei jeder Wähler mit einem entsprechenden Token verknüpft wird, das durch einen Authentifizierungsprozess im Wahlsystem erzeugt wird, und wobei jedes Token konfiguriert ist zum Identifizieren des jeweiligen Wählers, während eine Anonymität des Wählers im Wahlsystem gewahrt wird, wobei das Verfahren folgende Schritte umfasst, die von einer Vorrichtung durchgeführt werden, die wirksam mit dem Wahlsystem verbunden ist:

Erhalten (101) eines Tokens, das mit einem Wähler verknüpft ist, dessen Stimme überprüft werden soll,
Bereitstellen (102) des erhaltenen Tokens für einen Zugriffsmanager im Wahlsystem,
Erhalten (103) einer vom Zugriffsmanager erzeugten Signatursequenz, wobei die Signatursequenz auf der Grundlage des bereitgestellten Tokens erzeugt wird,
Erzeugen (104) einer Prüfanforderung auf der Grundlage der erhaltenen Signatursequenz und des erhaltenen Tokens, wobei die erzeugte Prüfanforderung eine binäre Sequenz von Aktionen umfasst, die auf einem Stimmzettel ausgeführt werden sollen, der mit der zu überprüfenden Stimme verknüpft ist.
Bereitstellen (105) der erzeugten Prüfanforderung für einen Verarbeitungsserver im Wahlsystem und
Erhalten (106) einer neu ausgezählten Zählung auf der Grundlage der Prüfanforderung vom Verarbeitungsserver zum Vergleich mit einer veröffentlichten Zählung auf einer Anzeigetafel des Wahlsystems.

2. Verfahren nach Anspruch 1, wobei die binäre Sequenz von Aktionen, die auf dem Stimmzettel durchgeführt werden sollen, Codieren einer der zu überprüfenden Stimme entsprechenden Operation als binäre Variable in der Signatursequenz umfasst.

3. Verfahren nach einem der Ansprüche 1-2, wobei die binäre Variable in der Signatursequenz einen negativen Binärwert zum Hinzufügen eines Stimmzettels oder einen entsprechenden negativen Binärwert zum Entfernen eines Stimmzettels umfasst.

4. Verfahren nach einem der Ansprüche 1-3, wobei die binäre Sequenz von Aktionen, die auf dem Stimmzettel durchgeführt werden sollen, Aktionen zum Multiplizieren der Signatursequenz mit einer Änderungsmustersequenz für die Stimme des jeweiligen Wählers umfasst.

5. Verfahren nach einem der Ansprüche 1-4, wobei die Ergebnisse der mit der Änderungsmustersequenz für die Stimme des jeweiligen Wählers multiplizierten Signatursequenz in dem Verarbeitungsserver mit einem oder mehreren anderen Ergebnissen aus anderen Multiplikationen, die Stimmen eines oder mehrerer anderer jeweiliger Wähler über eine entsprechende Anzahl von Zeitinstanzen entsprechen, aggregiert werden.

6. Verfahren nach einem der Ansprüche 1-5, wobei die binäre Sequenz von Aktionen, die auf dem Stimmzettel durchgeführt werden sollen, weiter Aktionen zum Entfernen der Änderungsmustersequenz aus den Ergebnissen der Multiplikation, durch Multiplizieren der Ergebnisse mit derselben Änderungsmustersequenz umfasst, um die Zählung mit hinzugefügter oder subtrahierter Stimme des einen oder der mehreren jeweiligen Wähler wiederherzustellen.

7. Verfahren nach den Ansprüchen 1-6, wobei die neu ausgezählte Zählung nach jeder Multiplikation neu berechnet und in einem mit dem Verarbeitungsserver verknüpften Speicher abgelegt wird.

8. Verfahren nach einem der Ansprüche 1-7, wobei die binäre Sequenz eine orthogonale Sequenz umfasst.

9. Verfahren nach einem der Ansprüche 1-8, wobei die orthogonale Sequenz einen Walsh-Code zur Verwendung in einem Codemultiplexverfahren-, CDMA-, Zugriffskanal umfasst.

10. Verfahren nach einem der Ansprüche 1-9, wobei die obigen Schritte von einer oder mehreren Apps in der Vorrichtung ausgeführt werden.

11. Computerprogrammprodukt, das ein nichtflüchtiges computerlesbares Medium umfasst, das darauf ein Computerprogramm aufweist, das Programmanweisungen umfasst, wobei das Computerprogramm in eine Datenverarbeitungseinheit geladen werden kann und dafür konfiguriert ist, eine Ausführung des Verfahrens nach einem der Ansprüche 1 bis 10 zu veranlassen, wenn das Computerprogramm von der Datenverarbeitungseinheit laufen gelassen wird.

12. Einrichtung zum Überprüfen einer elektronischen Stimme in einem Wahlsystem, wobei jeder Wähler mit einem entsprechenden Token verknüpft wird, das durch einen Authentifizierungsprozess im Wahlsystem erzeugt wird, und wobei jedes Token konfiguriert ist zum Identifizieren des jeweiligen Wählers, während eine Anonymität des Wählers im Wahlsystem gewahrt wird, wobei die Einrichtung eine Steuereinheit (410) umfasst, die dafür konfiguriert ist, Folgendes zu bewirkten:

Erhalt eines Tokens, der mit einem Wähler verknüpft ist, dessen Stimme überprüft werden soll,
Bereitstellung des erhaltenen Tokens für einen Zugriffsmanager im Wahlsystem,
Erhalt einer vom Zugriffsmanager erzeugten Signatursequenz, wobei die Signatursequenz auf der Grundlage des bereitgestellten Tokens erzeugt wird,
Erzeugung einer Prüfanforderung auf der Grundlage der erhaltenen Signatursequenz und des erhaltenen Tokens, wobei die erzeugte Prüfanforderung eine binäre Sequenz von Aktionen umfasst, die auf einem Stimmzettel ausgeführt werden sollen, der mit der zu überprüfenden Stimme verknüpft ist.
Bereitstellung der erzeugten Prüfanforderung für einen Verarbeitungsserver im Wahlsystem und
Erhalt einer neu ausgezählten Zählung auf der Grundlage der Prüfanforderung vom Verarbeitungsserver zum Vergleich mit einer veröffentlichten Zählung auf einer Anzeigetafel des Wahlsystems.

13. Vorrichtung, umfassend die Einrichtung nach Anspruch 12.

14. Vorrichtung nach Anspruch 13, wobei die Vorrichtung entweder eine mobile Kommunikationsvorrichtung oder eine stationäre Vorrichtung ist, die dafür konfiguriert ist, über einen Codemultiplexverfahren-, CDMA-, Zugangskanal zu kommunizieren.

15. Zugriffsmanager in einem Wahlsystem, wobei der Zugriffsmanager zu Folgendem konfiguriert ist:

eine Signatursequenz zu erzeugen, wobei die Signatursequenz auf der Grundlage eines bereitgestellten Tokens von einer Vorrichtung erzeugt wird, die wirksam mit dem Wahlsystem verbunden ist, und

die Länge der erzeugten Signatursequenz auf der Grundlage einer Anzahl von Wählern anzupassen, die im Wahlsystem gleichzeitig jeweilige Stimmen überprüfen.

16. Wahlsystem zum Überprüfen einer elektronischen Stimme, wobei jeder Wähler mit einem entsprechenden Token verknüpft wird, das durch einen Authentifizierungsprozess im Wahlsystem erzeugt wird, und wobei jedes Token konfiguriert ist zum Identifizieren des jeweiligen Wählers, während eine Anonymität des Wählers im Wahlsystem gewahrt wird, wobei das Wahlsystem einen Zugriffsmanager, der dafür konfiguriert ist, eine Signatursequenz zu erzeugen, einen Verarbeitungsserver, der dafür konfiguriert ist, eine Auszählung auf der Grundlage einer Prüfanforderung neu auszuzählen, eine Anzeigetafel, die dafür konfiguriert ist, eine Auszählung zu veröffentlichen, und eine Einrichtung nach Anspruch 12, die wirksam mit dem Wahlsystem verbunden ist, umfasst.

**Revendications**

1. Procédé de vérification d'un vote électronique dans un système de vote, dans lequel chaque votant est associé à un jeton respectif généré par un processus d'authentification dans le système de vote et dans lequel chaque jeton est configuré pour identifier le votant respectif tout en préservant l'anonymat du votant dans le système de vote, le procédé comprenant des étapes qui sont réalisées par un dispositif connecté de manière fonctionnelle au système de vote consistant à :

obtenir (101) un jeton associé à un votant pour lequel un vote doit être vérifié,
fournir (102) le jeton obtenu à un gestionnaire d'accès dans le système de vote,
obtenir (103) une séquence de signature générée par le gestionnaire d'accès, dans lequel la séquence de signature est générée sur la base du jeton fourni,
générer (104) une demande d'audit sur la base de la séquence de signature obtenue et du jeton obtenu, dans lequel la demande d'audit générée comprend une séquence binaire d'actions à effectuer sur un bulletin de vote associé au vote à vérifier,
fournir (105) la demande d'audit générée à un serveur de traitement dans le système de vote, et

obtenir (106) un comptage recompté sur la base de la demande d'audit du serveur de traitement pour une comparaison avec un comptage publié sur un tableau d'affichage du système de vote.

2. Procédé selon la revendication 1, dans lequel la séquence binaire d'actions à effectuer sur le bulletin de vote comprend le codage d'une opération correspondant au vote à vérifier sous la forme d'une variable binaire dans la séquence de signature.

3. Procédé selon l'une quelconque des revendications 1-2, dans lequel la variable binaire dans la séquence de signature comprend une valeur binaire négative pour ajouter un bulletin de vote ou une valeur binaire négative correspondante pour retirer un bulletin de vote.

4. Procédé selon l'une quelconque des revendications 1-3, dans lequel la séquence binaire d'actions à effectuer sur le bulletin de vote comprend des actions pour multiplier la séquence de signature avec une séquence de motif de changement pour le vote du votant respectif.

5. Procédé selon l'une quelconque des revendications 1-4, dans lequel les résultats de la séquence de signature multipliée avec la séquence de motif de changement pour le vote du votant respectif sont agrégés dans le serveur de traitement avec un ou plusieurs autres résultats d'autres multiplications correspondant aux votes d'un ou de plusieurs autres votants respectifs sur un nombre correspondant d'instances de temps.

6. Procédé selon l'une quelconque des revendications 1-5, dans lequel la séquence binaire d'actions à effectuer sur le bulletin de vote comprend en outre des actions pour supprimer la séquence de motif de changement des résultats de la multiplication en multipliant les résultats avec la même séquence de motif de changement pour récupérer le comptage avec le vote ajouté ou soustrait des un ou plusieurs votants respectifs.

7. Procédé selon les revendications 1-6, dans lequel le comptage recompté est recalculé et enregistré dans une mémoire associée au serveur de traitement après chaque multiplication.

8. Procédé selon l'une quelconque des revendications 1-7, dans lequel la séquence binaire comprend une séquence orthogonale.

9. Procédé selon l'une quelconque des revendications 1-8, dans lequel la séquence orthogonale comprend un code Walsh destiné à être utilisé dans un canal d'accès à accès multiple par répartition en code, CDMA.

10. Procédé selon l'une quelconque des revendications 1-9, dans lequel les étapes ci-dessus sont réalisées par une ou plusieurs applications dans le dispositif.

11. Produit de programme informatique comprenant un support non transitoire lisible par ordinateur sur lequel il y a un programme informatique comprenant des instructions de programme, le programme informatique pouvant être chargé dans une unité de traitement de données et configuré pour amener l'exécution du procédé selon l'une quelconque des revendications 1 à 10 lorsque le programme informatique est exécuté par l'unité de traitement de données.

12. Appareil de vérification d'un vote électronique dans un système de vote, dans lequel chaque votant est associé à un jeton respectif généré par un processus d'authentification dans le système de vote et dans lequel chaque jeton est configuré pour identifier le votant respectif tout en préservant l'anonymat du votant dans le système de vote, l'appareil comprenant un dispositif de commande (410) configuré pour amener :

l'obtention d'un jeton associé à un votant pour lequel un vote doit être vérifié,
la mise à disposition du jeton obtenu à un gestionnaire d'accès dans le système de vote,
l'obtention d'une séquence de signature générée par le gestionnaire d'accès, dans lequel la séquence de signature est générée sur la base du jeton fourni,
la génération d'une demande d'audit sur la base de la séquence de signature obtenue et du jeton obtenu, dans lequel la demande d'audit générée comprend une séquence binaire d'actions à effectuer sur un bulletin de vote associé au vote à vérifier,
la transmission de la demande d'audit générée à un serveur de traitement du système de vote, et
l'obtention d'un comptage recompté sur la base de la demande d'audit du serveur de traitement pour une comparaison avec un comptage publié sur un tableau d'affichage du système de vote.

13. Dispositif comprenant l'appareil selon la revendication 12.

14. Dispositif selon la revendication 13, dans lequel le dispositif est soit un dispositif de communication mobile, soit un dispositif stationnaire configuré pour communiquer sur un canal d'accès multiple par répartition de code, CDMA.

15. Gestionnaire d'accès dans un système de vote, le gestionnaire d'accès étant configuré pour :

générer une séquence de signature, dans lequel la séquence de signature est générée sur la base d'un jeton fourni par un dispositif connecté de manière fonctionnelle au système de vote, et ajuster la longueur de la séquence de signature générée sur la base d'un nombre de votants vérifiant simultanément des votes respectifs dans le système de vote.

16. Système de vote pour vérifier un vote électronique, dans lequel chaque votant est associé à un jeton respectif généré par un processus d'authentification dans le système de vote et dans lequel chaque jeton est configuré pour identifier le votant respectif tout en maintenant l'anonymat du votant dans le système de vote, le système de vote comprenant un gestionnaire d'accès qui est configuré pour générer une séquence de signature, un serveur de traitement qui est configuré pour recompter un comptage sur la base d'une demande d'audit, un tableau d'affichage qui est configuré pour publier un comptage et un appareil selon la revendication 12 connecté de manière fonctionnelle au système de vote.

100

101 Obtaining token

102 Providing obtained token

103 Obtaining signature

104 Generating audit request

105 Providing audit request

106 Obtaining recounted tally

# FIG 1

FIG 2

FIG 3a

300b

| | List of ballots | | |
|---|---|---|---|
| | Voter's token | Ciphertext | Voted for |
| Alice's token | 🔑 7381 | | ▇▇▇▇ |
| Bob's token | 🔑 9847 | | ▇▇▇▇ |
| Carol's token | 🔑 8299 | | ▇▇▇▇ |

FIG 3b

FIG 3c

FIG 3d

```
Official tally:
    id      candidateNames        votes
    ~~~     ~~~~~~~~~~~~~~~~       ~~~~~

    5       'Jeanette Lasta'        6
    2       'Andrea Seconda'        4
    3       'Mikaela Thirda'        2
    4       'Mark Forth'            2
    1       'Vittorio Firsta'       1
```

300e

```
Tally with removed vote:
    id      candidateNames        votes
    ~~~     ~~~~~~~~~~~~~~~~       ~~~~~

    5       'Jeanette Lasta'        5
    2       'Andrea Seconda'        4
    3       'Mikaela Thirda'        2
    4       'Mark Forth'            2
    1       'Vittorio Firsta'       1
```

FIG 3e

FIG 4

FIG 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2009037260 A1, FELTEN EDWARD W [US]
- US 7516892 B2
- US 8145520 B2